# EUROPEAN PATENT SPECIFICATION

(11) **EP 3 598 166 B1**
(45) Date of publication and mention of the grant of the patent: **20.04.2022**
(21) Application number: 19185151.8
(22) Date of filing: 09.07.2019
(51) Int. Cl.: G01S 7/02, G01S 13/04, G08B 13/26, G08B 13/24

(54) **RADAR FOR INTRUSION DETECTION COMPRISING A SHIELDING ELEMENT**
RADAR ZUR INTRUSIONSERKENNUNG MIT EINEM SCHIRMELEMENT
RADAR DE DETECTION D'INTRUSION COMPRENANT UN ELEMENT DE BLINDAGE

(30) Priority: 13.07.2018 IT 201800007195
(43) Date of publication of application: 22.01.2020
(73) Proprietor: Inxpect S.p.A., 25131 Brescia (BS) (IT)
(72) Inventor: Degani, Alessio, 25131 Brescia BS (IT)
(74) Representative: Perani & Partners S.p.A.

(56) References cited:
- WO-A1-03/008244
- US-A1- 2017 168 136
- US-B1- 8 149 153

## Description

### Field of The Invention

The invention finds application in the field of radar detection, especially for intrusion prevention monitoring. In particular, the invention provides a shield for suppressing signal components reflected toward undesired directions by certain parts of the radar.

### Description of the prior art

In known radars an electromagnetic signal, for example radio waves, may be transmitted and received by an electronic unit such as a printed circuit board with one or more antennas formed thereon.

The electronic unit is generally placed in a housing that protects it from atmospheric agents such as moisture. In certain known radars, the housing, which has a substantially cylindrical shape, is installed in a sealed spherical body, which is rotatably associated with a stationary support, allowing it to be oriented in the desired direction.

The signal transmitted by the electronic unit must pass through the housing for the radar to detect the objects in the surrounding environment, within a field of view having, for instance, a depth ranging from 1 to 50 m. In particular, the signal is transmitted through a front wall of the housing, facing the antenna.

US 2017168136 describes a radar device that is arranged in a box with many compartments, that are shielded on the side walls and on the back wall for the radar not to disturb other electronics.

US 8149153 and WO 03008244 describe rotational arrangements for some non-radar sensors. In US 8149153 the sensor, which can be an optical device, is partially shielded from outside radiation. In WO 03008244 the sensor can be for example an accelerometer, which is arranged inside a housing which will preferably completely prevent radar signals to pass outside.

### Problem of the prior art

While the front wall of the housing, which may be made, for example, of plastics, allows the passage of most of the signal, some reflection may still occur. Various shares of the reflected signal, depending on their direction, may be directly incident on the electronic unit and be absorbed thereby, or may pass beside the electronic unit and exit the housing from the side or the rear, going therebehind.

Beyond the back of the housing, the signal may encounter further reflective objects, and in this case part of the signal travels along the path already followed in the reverse direction and is collected by the electronic unit, as it occurs with the objects to be detected in front of the radar.

Therefore, a radar like those described above may cause false alarms due to the movement of objects behind the radar, i.e. outside the desired field of view of the radar, which are mistaken as objects in front of it. In other words, the radar also detects objects in an undesired rear field of view, which has a smaller depth than the front field of view because each reflection on the front wall significantly attenuates signal intensity.

The applicant found that this does not occur when a large wall is placed immediately behind the radar, but when the reflected signal from the front wall can travel in an open space and encounters an object situated at a distance ranging, for instance, from 0.5 to 5 m.

In fact, when the radar is fixed to a wall, the signal reflected from the wall has a short overall time of flight between transmission and reception, just like the signal that is reflected once from the front wall of the radar and immediately returns to the electronic unit. As a result, these reflected signal components cannot be mistaken for distant objects situated in the front field of view, and they may easily be filtered or neglected.

### Summary of The Invention

The object of the present invention is to prevent misinterpretations of the signal collected by the antennas of a radar due to the signal reflected from the front wall of its housing.

A further object of the present invention is to provide a radar device for intrusion detection that is reliable, simple and inexpensive.

These and other objects are fulfilled by a radar detection structure as defined in any of the accompanying claims. In such device, an electronic unit is placed in a housing, surrounded by a peripheral wall thereof, and transmits an electromagnetic signal toward a front wall of the housing. The device is equipped with a shield, such as a metal band, arranged around the electronic unit. The shield defines a channel that extends from a front end portion, proximate to the front wall of the housing, at least to the level of the electronic unit.

Advantageously, substantially the entire signal reflected from the front wall of the housing is immediately absorbed, as it is directed toward the electronic unit or the shield. Therefore, no significant shares of the signal can reach behind the housing and generate alarms for moving objects in areas that should not be monitored.

The device may be integrated in a structure to obtain the desired orientation.

### BIEF DESCRIPTION OF THE DRA WINGS

The characteristics and advantages of the present invention will result from the following detailed description of a possible practical embodiment, illustrated as a nonlimiting example in the set of drawings, in which:
- Figure 1 shows a perspective view of a radar device of the invention,
- Figure 2 shows the device of Figure 1 during an assembly step,

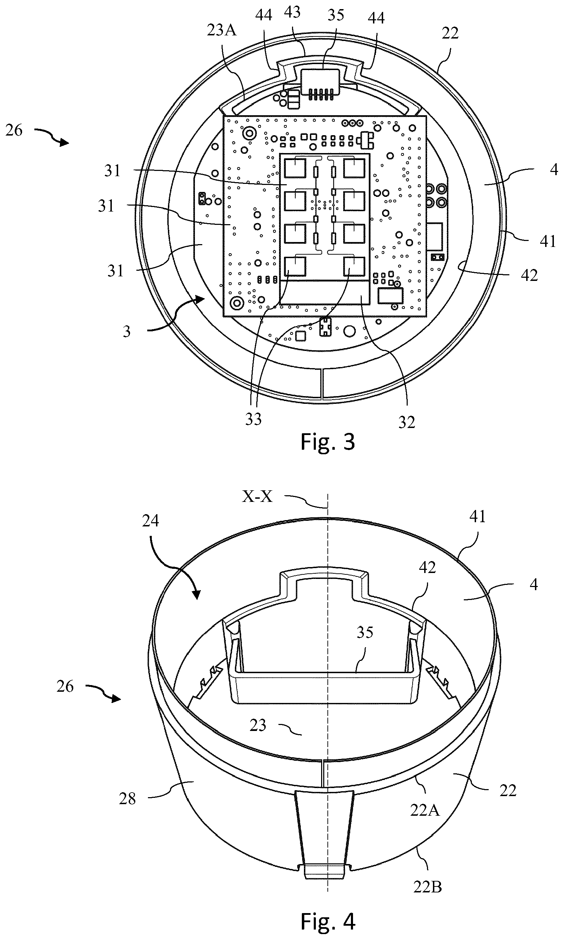

- Figure 3 shows a front view of an interior of the radar device of Figure 1,
- Figure 4 shows a further view of the interior of the device of Figure 1, with the omission of an electronic unit of the radar device,

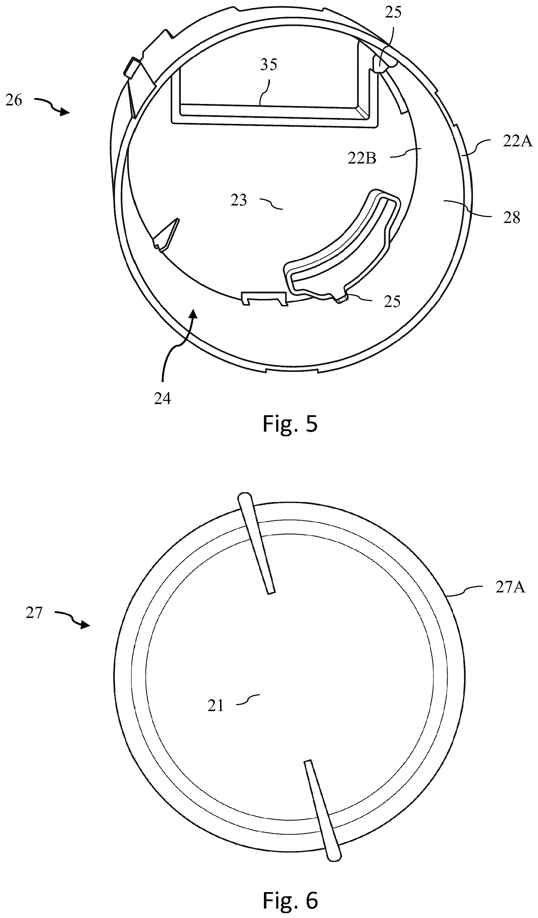

- Figure 5 shows a base body of the device of Figure 1,
- Figure 6 shows a cap of the device of Figure 1, and
- Figure 7 shows an exploded view of a radar detection structure having the device of Figure 1.

### Detailed Description

The accompanying figures show a radar device for intrusion detection according to the invention, generally designated by numeral 1. The radar device 1 comprises a housing 2 for an electronic unit 3.

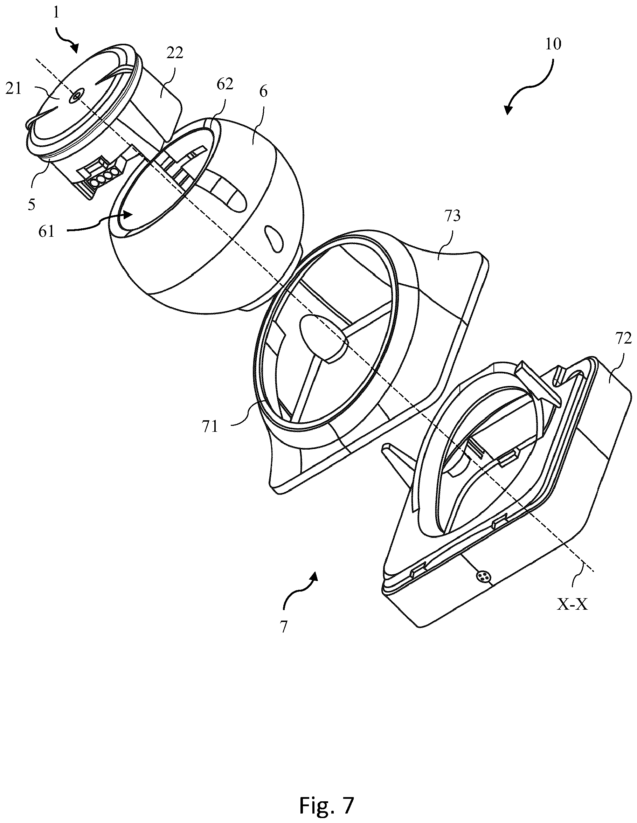

In particular, Figure 7 shows a radar detection structure 10 having the radar device 1. The structure 10 comprises an orienting body 6, e.g. a spherical body. The orienting body 6 has a compartment 61 for the housing 2 to be fixed therein.

The housing 2 comprises a substantially flat front wall 21. Furthermore, the housing 2 comprises a peripheral wall 22 which extends in a longitudinal direction X-X between a front end portion 22A, at the front wall 21, and a rear end portion 22b which is spaced apart from the front wall 21.

Preferably, the housing also comprises a rear wall 23, opposite to the front wall 21 and spaced apart therefrom in the longitudinal direction X-X. In this case the rear end portion 22b of the peripheral wall 22 is placed at the rear wall 23. Nevertheless, in certain embodiments no rear wall 23 is provided, and the housing may have an open rear side at the rear end portion 22B of the peripheral wall 22.

In the illustrated embodiment the front wall 21 has a substantially circular shape, and the peripheral wall 22 has a substantially cylindrical shape. In the preferred embodiment openings are formed in the peripheral wall 22 and in the bottom wall 23, as described in greater detail below.

The peripheral wall 22, the front wall 21 and, if any, the rear wall 23 delimit a housing seat 24 for an electronic unit 3. The housing 2 further comprises at least one fixing support 25, in the housing seat 24, for an electronic unit 3 to be fixed thereto.

An electronic unit 3 is placed in the housing seat 24 and is fixed to the fixing support 25. The electronic unit 3 is spaced apart from the front wall 21 in the longitudinal direction X-X at a first distance.

Preferably, the electronic unit 3 comprises at least one electronic board 31, for example a printed circuit board, arranged transverse to the longitudinal direction X-X. In the illustrated embodiment, the electronic unit 3 comprises three electronic boards 31 that are fastened together by means of spacing supports 32, and are spaced apart in the longitudinal direction X-X.

Behind the at least one board 31, the electronic unit 3 may comprise a fastening element (not shown) fixed to the fixing support 25, or a fastening hole (not shown) in which the fixing support 25 may be fastened. A skilled person will obviously understand that the fixing support 25 and any fastening elements or holes may be provided in a variety of shapes and arrangements to fix the electronic unit 3 to the housing 2. In the illustrated embodiment a plurality of fixing supports 25 project out of the bottom wall 23 toward the front wall 21.

The electronic unit 3 is configured to transmit an electromagnetic signal in a range of frequencies. Particularly, the electronic unit 3 comprises an antenna 33, or a plurality of antennas 33, for example formed on one of the electronic boards 31. Preferably, the antenna 33 is formed on a front electronic board 31, which is placed at a distance from the front wall 21 than that is shorter than the distance of the other electronic boards 31 from the front wall 21. Preferably, the front electronic board 31 is placed at the first distance from the front wall 21.

In particular, the electronic unit 3 is configured to transmit the electromagnetic signal outside the housing 2, mainly in the longitudinal direction X-X, through the front wall 21.

The radar device 1 comprises a shield 4 for blocking the electromagnetic signal. In detail, the shield 4 is adapted to shield an electromagnetic signal at least in the range of frequencies in which the signal is transmitted by the electronic unit 3. For example, the shield 4 may be made of metal or a frequency absorbing material having the desired specific frequency absorption range, such as Eccosorb^{®}.

On the other hand, it shall be noted that the housing 2, and in particular its front wall 21, is made of a material that allows the passage of at least part of an electromagnetic signal in the range of frequencies in which the signal is transmitted by the electronic unit 3. More in detail, the front wall 21 is made of a material that is partially (predominantly) transparent to the electromagnetic signal, and partially (marginally) reflective for the electromagnetic signal, considering the range of emission frequencies of the electronic unit 3. For example, the front wall 21 may be made of a plastic material.

The shield 4 is fixedly mounted to the housing 2. In detail, the shield 4 surrounds the electronic unit 3 and defines a channel that extends in the longitudinal direction X-X between a front end portion 41, in particular a front edge, and a rear end portion 42, in particular a rear edge. The front end portion 41 of the shield 4 is placed proximate to the front wall 21, preferably at the front wall 21, i.e. with the front edge contacting the front wall 21, and defining a front opening of the channel. The rear end portion 42 of the shield 4 defines a rear opening of the channel. In other words, the shield 4 is open at the front end portion 41 and/or the rear end portion 42.

The rear end portion 42 of the shield 4 is spaced apart from the front wall 21 at a second distance that is greater than or equal to the first distance. In other words, the electronic unit 3 is located, in the longitudinal direction X-X, substantially level with the rear end portion 42 of the shield 4, or between the front end portion 41 and the rear end portion 42 of the shield 4. It shall be obviously understood that the front wall 21 is closer to the front end portion 41 than to the electronic unit 3.

The electronic unit 3 is further configured to transmit the electromagnetic signal mainly through the channel defined by the shield 4, toward the front wall 21 of the housing 2. It shall be noted that the front end portion 41 of the shield 4 defines a contour of an exit portion for the electromagnetic signal, on the front wall 21.

In the preferred embodiment at least one of the electronic boards 31 occupies a major portion of a section of the channel defined by the shield 4, transverse to the longitudinal direction X-X. In other words, one electronic board 31 may substantially entirely obstruct the channel, for example at the rear end portion 42 of the shield 4. This electronic board 31 is not necessarily the electronic board 31 in which the antenna 33 is formed.

The above described shield 4 prevents significant shares of the signal, reflected from the front wall 21, from reaching behind the radar device 1 by passing between the front wall 21 and the front end portion 41 of the shield 4, or between the electronic unit 3 and the rear end portion 42 of the shield. Therefore, the signal reflected from the front wall 21 is substantially entirely absorbed by the electronic unit 3, or it is reflected by the shield 4 and later absorbed by the electronic unit 3.

In one embodiment, not shown, the shield 4 defines the peripheral wall 22 of the housing 2. In another embodiment the shield 4 may be a coating of the peripheral wall 22, obtained for example by co-molding the housing 3 and the shield 4. In the preferred embodiment, as shown in the figures, the shield 4 is a distinct element, separate from the peripheral wall 22, and is particularly arranged along the peripheral wall 22 of the housing 2. More in detail, the shield 4 is provided in the form of a substantially annular band. The metal band extends from the front end portion 41 to the rear end portion 42, in particular from the front edge to the rear edge.

It shall be noted that the shield 4 may be placed either inside or outside the peripheral wall 22, and may also contact the peripheral wall 22 or be spaced apart therefrom. In fact, the peripheral wall 22 may be made of a material that allows the passage of at least part of the electromagnetic signal, for example the same material that is used for the front wall 21. Therefore, even if the shield 4 is external to the peripheral wall 22, the signal incident on the peripheral wall 22 would pass through the peripheral wall 22 and later encounter the shield 4, or it would be again reflected by the peripheral wall 22 and encounter the electronic unit 3.

The Applicant noted that the described position of the shield 4 is considerably better than the alternative of providing a metal shield behind the electronic unit 3, at the bottom wall 23, perpendicular to the longitudinal direction X-X. In fact, this arrangement causes high electromagnetic disturbance, potentially affecting the detection of any type of target. It shall be noted that the above described undesired electromagnetic disturbance effect was ascertained as a result of metallization of the inner surface of the compartment 61 that receives the housing 2: such metallization concentrates the reflected portion of the signal, thereby causing interferences that would significantly worsen radar performance.

In the preferred embodiment, the housing 2 comprises a base body 26 and a cap 27 that is removably fixed to the base body 26. In particular, the base body 26 comprises the fixing support 25, as well as the optional rear wall 23, and the cap 27 comprises the front wall 21.

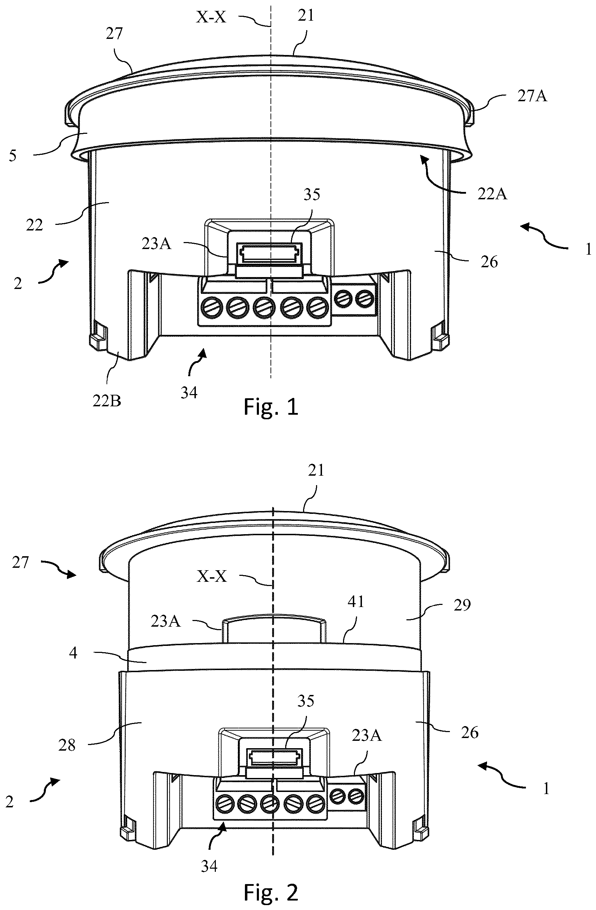

The base body 26 and the cap 27 have respective peripheral walls 28, 29 that fit one inside the other. The peripheral wall 22 of the housing 2 may be identified by any peripheral wall 28, 29 of the base body 26 or the cap 27, or by a combination of the two. Figure 2 shows a step of assembly of the radar device 1 in which the peripheral wall 29 of the cap 27 is partially fitted into the peripheral wall 28 of the base body 26.

In the embodiment of the figures, the shield 4 is at least partially interposed between the peripheral walls 28, 29 of the base body 26 and of the cap 27. In particular, the shield 4 is placed inside the peripheral wall 28 of the base body 26 and outside the peripheral wall 29 of the cap 27.

Furthermore, the front end portion 41 of the shield 4 projects toward the front wall 21 with respect to the peripheral wall 28 of the base body 26. In particular, the front end portion 41 of the shield 4 projects with a longitudinal distance which is substantially constant along an edge of the peripheral wall 28 of the base body 26 that faces the front wall 21.

The cap 27 rests on the front end portion 41 of the shield 4. More in detail, the cap 27 has a flange 27a that surrounds the peripheral wall 29 of the cap 27, and the cap 27 rests on the shield 4 at the flange 27A. The flange 27a is longitudinally level with the front wall 21.

In order to protect the electronic unit 3 from external atmospheric agents, the radar device 1 comprises a sealing gasket 5, preferably having a ring shape. In the illustrated embodiment the gasket 5 is placed between the front end portion 41 of the shield 4 and the cap 27, at the flange 27A.

The structure 10 comprises a support body 7, which may be adapted to be fixed to a wall. The orienting body 6 is connected to the support body 7 so as to be orientable in a plurality of directions. Thus, also the detection device 1 will be oriented with the orientating body 6. In particular, the housing 2, the electronic board 3 and the shield 4 are mounted to each other and to the orienting body 6 in such a manner that they will move together rigidly while the orienting body 6 is being oriented.

The support body 7 has a circular mouth 71, which is shaped so as to retain the spherical body with a predetermined orientation. More in detail, the support body 7 comprises a base 72 designed to be fixed to a wall and a locking body 73 designed to be fixed to the base 72. The mouth 71 is formed in the locking body 73, and the orienting body 6 is at least partially placed between the base and the locking body 73.

Preferably, the orientating body 6 and the housing 2 form together a sealed container. More in detail, the compartment 61 of orienting body 6 has an opening for receiving the housing 2, which is delimited by an edge 62. The gasket 5 creates a seal between the base 62 and the cap 27.

The orienting body further has a rear sealed cable gland opening (not shown), which may receive power cables for the electronic unit. Still for the passage of cables, the housing 2 has one or more cable-receiving openings 23A, formed in the rear wall 23 and/or the peripheral wall 22 (indifferently in the peripheral wall 28 of the base body 26, in the peripheral wall 29 of the cap 27 or both). More in detail, the electronic unit 3 comprises a plurality of connectors 34 facing the cable-receiving opening 23A and adapted for fixing at least one cable.

In the preferred embodiment, the electronic unit 3 comprises an interface port 35, e.g. a USB port, facing the cable-receiving opening 23A. Thus, the electronic unit 3 can be connected to a computer through the interface port 35 to receive configuration information. The shield 4 preferably has a notch 43 delimited by two opposite longitudinal edges 44, and the interface port 35 is situated between the longitudinal edges 44 of the notch 43.

The longitudinal edges 44 of the notch 43 abut a peripheral rib of the cable-receiving opening 23A. This will prevent any displacement of the shield 4 relative to the housing 2.

## Claims

1. A structure for radar detection (10) comprising:
- a support body (7) adapted to be fixed to a wall,
- an orienting body (6), which is connected to the support body (7) so as to be orientable in a plurality of directions, the orienting body (6) having a compartment (61), and
- a radar device (1) for intrusion detection, comprising:
- a housing (2) fixed in the compartment (61) of the orienting body (6), the housing (2) comprising a front wall (21), a peripheral wall (22), which extends in a longitudinal direction (X-X) between the front wall (21) and a rear end portion (22B), and which delimits a housing seat (24) for an electronic unit (3), and a fixing support (25) located in the housing seat (24),
- an electronic unit (3), which is accommodated in the housing seat (24), fixed to the fixing support (25) and spaced apart from the front wall (21) in the longitudinal direction (X-X) at a first distance, the electronic unit (3) being configured to transmit an electromagnetic signal out of the housing (2), mainly in the longitudinal direction (X-X) through the front wall (21),
- a shield (4) for blocking the electromagnetic signal,
wherein the shield (4) surrounds the electronic unit (3) and defines a channel that extends in the longitudinal direction (X-X) between a front end portion (41) proximate to the front wall (21) and a rear end portion (42) spaced apart from the front wall (21) at a second distance that is greater than or substantially equal to the first distance, wherein the shield (4) is fixedly mounted to the housing (2), and wherein the front end portion (41) of the shield (4) defines a front opening of the channel and the rear end portion (42) of the shield (4) defines a rear opening of the channel.

2. A structure (1) as claimed in claim 1, wherein the shield (4) is arranged along the peripheral wall (22) of the housing (2).

3. A structure (1) as claimed in claim 1 or 2 wherein the electronic unit (3) is oriented so as to transmit the electromagnetic signal through the channel defined by the shield (4), toward the front wall (21).

4. A structure (10) as claimed in any of claims 1 to 3, wherein the electronic unit (3) comprises an electronic board (31) arranged transverse to the channel identified by the shield (4), the electronic board (31) occupying a major portion of a section of the channel identified by the shield (4).

5. A structure (10) as claimed in any of claims 1 to 4, wherein the shield (4) comprises a metal band having a substantially annular shape, which extends from the front end portion (41) to the rear end portion (42).

6. A structure (10) as claimed in any of claims 1 to 5, wherein the housing (2) comprises a base body (26) that comprises the fixing support (25), and a cap (27) that comprises the front wall (21), the cap (27) being removably fixed to the base body (26).

7. A structure (10) as claimed in claim 6, wherein the base body (26) and the cap (27) have respective peripheral walls (28, 29) that fit one inside the other, the shield (4) being at least partially interposed between the peripheral walls (28, 29) of the base body (26) and of the cap (27).

8. A structure (10) as claimed in claim 6 or 7, wherein the cap (27) abuts the shield (4) at the front end portion (41) of the shield (4).

9. A structure (10) as claimed in claim 8, comprising a sealing gasket (5) between the cap (27) and the front end portion (41) of the shield (4).

10. A structure (10) as claimed in any of claims 1 to 9, wherein the housing (2), the electronic board (3) and the shield (4) are mounted to each other and to the orienting body (6) in such a manner that, while orienting the orienting body (6) relative to the support body (7), they move together rigidly.

11. A structure (10) as claimed in any of claims 1 to 10, wherein the front end portion (41) defines a front edge that contacts the front wall (21).

## Patentansprüche

1. Eine Struktur zur Radarerfassung (10), umfassend:
- einen Trägerkörper (7), der an einer Wand befestigt werden kann,
- einen Ausrichtungskörper (6), der mit dem Trägerkörper (7) so verbunden ist, dass er in eine Vielzahl von Richtungen ausrichtbar ist, wobei der Ausrichtungskörper (6) ein Fach (61) aufweist, und
- ein Radargerät (1) zur Erkennung eines Eindringens, umfassend:
- ein Gehäuse (2), das in dem Fach (61) des Ausrichtungskörpers (6) befestigt ist, wobei das Gehäuse (2) eine Vorderwand (21), eine Umfangswand (22), die sich in einer Längsrichtung (X-X) zwischen der Vorderwand (21) und einem hinteren Endabschnitt (22B) erstreckt und die einen Gehäusesitz (24) für eine elektronische Einheit (3) begrenzt, und einen in dem Gehäusesitz (24) angeordneten Befestigungshalter (25) umfasst,
eine elektronische Einheit (3), die in dem Gehäusesitz (24) untergebracht ist, an dem Befestigungshalter (25) befestigt ist und von der Vorderwand (21) in der Längsrichtung (X-X) in einem ersten Abstand beabstandet ist, wobei die elektronische Einheit (3) so konfiguriert ist, dass sie ein elektromagnetisches Signal aus dem Gehäuse (2) heraus, hauptsächlich in der Längsrichtung (X-X) durch die Vorderwand (21), überträgt,
- eine Abschirmung (4) zur Sperrung des elektromagnetischen Signals, wobei die Abschirmung (4) die elektronische Einheit (3) umgibt und einen Kanal bildet, der sich in Längsrichtung (X-X) zwischen einem vorderen Endabschnitt (41) in der Nähe der Vorderwand (21) und einem hinteren Endabschnitt (42) erstreckt, der von der Vorderwand (21) um einen zweiten Abstand entfernt ist, der größer als oder im Wesentlichen gleich dem ersten Abstand ist, wobei die Abschirmung (4) fest an dem Gehäuse (2) angebracht ist und wobei der vordere Endabschnitt (41) der Abschirmung (4) eine vordere Öffnung des Kanals bildet und der hintere Endabschnitt (42) der Abschirmung (4) eine hintere Öffnung des Kanals bildet.

2. Struktur (1) nach Anspruch 1, wobei die Abschirmung (4) entlang der Umfangswand (22) des Gehäuses (2) angeordnet ist.

3. Struktur (1) nach Anspruch 1 oder 2, wobei die elektronische Einheit (3) so ausgerichtet ist, dass sie das elektromagnetische Signal durch den von der Abschirmung (4) gebildeten Kanal in Richtung der Vorderwand (21) überträgt.

4. Struktur (10) nach einem der Ansprüche 1 bis 3, wobei die elektronische Einheit (3) eine elektronische Platine (31) umfasst, die quer zu dem durch die Abschirmung (4) festgelegten Kanal angeordnet ist, wobei die elektronische Platine (31) einen Großteil eines Abschnitts des durch die Abschirmung (4) festgelegten Kanals einnimmt.

5. Struktur (10) nach einem der Ansprüche 1 bis 4, wobei die Abschirmung (4) ein im Wesentlichen ringförmiges Metallband umfasst, das sich von dem vorderen Endabschnitt (41) zu dem hinteren Endabschnitt (42) erstreckt.

6. Struktur (10) nach einem der Ansprüche 1 bis 5, wobei das Gehäuse (2) einen Unterlagenkörper (26), der den Befestigungshalter (25) umfasst, und eine Kappe (27) umfasst, die die Vorderwand (21) umfasst, wobei die Kappe (27) abnehmbar am Unterlagenkörper (26) befestigt ist.

7. Struktur (10) nach Anspruch 6, wobei der Unterlagenkörper (26) und die Kappe (27) jeweils ineinander passende Umfangswände (28, 29) aufweisen, wobei die Abschirmung (4) zumindest teilweise zwischen die Umfangswände (28, 29) des Unterlagenkörpers (26) und der Kappe (27) eingefügt ist.

8. Struktur (10) nach Anspruch 6 oder 7, wobei die Kappe (27) an der Abschirmung (4) am vorderen Endabschnitt (41) der Abschirmung (4) anliegt.

9. Struktur (10) nach Anspruch 8, umfassend eine Dichtung (5) zwischen der Kappe (27) und dem vorderen Endabschnitt (41) der Abschirmung (4).

10. Struktur (10) nach einem der Ansprüche 1 bis 9, wobei das Gehäuse (2), die elektronische Platine (3) und die Abschirmung (4) so aneinander und an dem Ausrichtungskörper (6) befestigt sind, dass sie sich beim Ausrichten des Ausrichtungskörpers (6) relativ zum Trägerkörper (7) starr zusammen bewegen.

11. Struktur (10) nach einem der Ansprüche 1 bis 10, wobei der vordere Endabschnitt (41) eine Vorderkante bildet, die die Vorderwand (21) berührt.

## Revendications

1. Structure de détection par radar (10) comprenant :
- un corps de support (7) adapté pour être fixé à un mur,
- un corps d'orientation (6), qui est relié au corps de support (7) de manière à pouvoir être orienté dans une pluralité de directions, le corps d'orientation (6) ayant un compartiment (61), et
- un dispositif radar (1) de détection d'intrusion, comprenant :
- un boîtier (2) fixé dans le compartiment (61) du corps d'orientation (6), le boîtier (2) comprenant une paroi avant (21), une paroi périphérique (22), qui s'étend dans une direction longitudinale (X-X) entre la paroi avant (21) et une partie d'extrémité arrière (22B), et qui délimite un siège de boîtier (24) pour une unité électronique (3), et un support de fixation (25) situé dans le siège de boîtier (24),
- une unité électronique (3), qui est logée dans le siège de boîtier (24), fixée au support de fixation (25) et espacée de la paroi avant (21) dans la direction longitudinale (X-X) à une première distance, l'unité électronique (3) étant configurée pour transmettre un signal électromagnétique hors du boîtier (2), principalement dans la direction longitudinale (X-X) à travers la paroi avant (21),
- un blindage (4) pour bloquer le signal électromagnétique, dans lequel le blindage (4) entoure l'unité électronique (3) et définit un canal qui s'étend dans la direction longitudinale (X-X) entre une partie d'extrémité avant (41) à proximité de la paroi avant (21) et une partie d'extrémité arrière (42) espacée de la paroi avant (21) à une seconde distance qui est supérieure ou sensiblement égale à la première distance, dans lequel le blindage (4) est monté de manière fixe sur le boîtier (2), et dans lequel la partie d'extrémité avant (41) du blindage (4) définit une ouverture avant du canal et la partie d'extrémité arrière (42) du blindage (4) définit une ouverture arrière du canal.

2. Structure (1) selon la revendication 1, dans laquelle le blindage (4) est disposé le long de la paroi périphérique (22) du boîtier (2).

3. Structure (1) selon la revendication 1 ou 2, dans laquelle l'unité électronique (3) est orientée de manière à transmettre le signal électromagnétique à travers le canal défini par le blindage (4), vers la paroi avant (21).

4. Structure (10) selon l'une quelconque des revendications 1 à 3, dans laquelle l'unité électronique (3) comprend une carte électronique (31) disposée transversalement au canal identifié par le blindage (4), la carte électronique (31) occupant une partie majeure d'une section du canal identifié par le blindage (4).

5. Structure (10) selon l'une quelconque des revendications 1 à 4, dans laquelle le blindage (4) comprend une bande métallique ayant une forme sensiblement annulaire, qui s'étend de la partie d'extrémité avant (41) à la partie d'extrémité arrière (42).

6. Structure (10) selon l'une quelconque des revendications 1 à 5, dans laquelle le boîtier (2) comprend un corps de base (26) qui comprend le support de fixation (25), et un capuchon (27) qui comprend la paroi avant (21), le capuchon (27) étant fixé de manière amovible au corps de base (26).

7. Structure (10) selon la revendication 6, dans laquelle le corps de base (26) et le capuchon (27) ont des parois périphériques respectives (28, 29) qui s'emboîtent l'une dans l'autre, le blindage (4) étant au moins partiellement interposé entre les parois périphériques (28, 29) du corps de base (26) et du capuchon (27).

8. Structure (10) selon la revendication 6 ou 7, dans laquelle le capuchon (27) vient en butée contre le blindage (4) au niveau de la partie d'extrémité avant (41) du blindage (4).

9. Structure (10) selon la revendication 8, comprenant un joint d'étanchéité (5) entre le capuchon (27) et la partie d'extrémité avant (41) du blindage (4).

10. Structure (10) selon l'une quelconque des revendications 1 à 9, dans laquelle le boîtier (2), la carte électronique (3) et le blindage (4) sont montés l'un sur l'autre et sur le corps d'orientation (6) de telle sorte que, tout en orientant le corps d'orientation (6) par rapport au corps de support (7), ils se déplacent ensemble de manière rigide.

11. Structure (10) selon l'une quelconque des revendications 1 à 10, dans laquelle la partie d'extrémité avant (41) définit un bord avant qui est en contact avec la paroi avant (21).
